# EUROPEAN PATENT APPLICATION

(11) **EP 4 684 842 A1**
(43) Date of publication of application: **28.01.2026**
(21) Application number: 24795843.2
(22) Date of filing: 11.04.2024
(51) Int. Cl.: A62C 3/16, F23G 7/06, F23Q 13/00, A62C 31/00, A62C 37/00, H01M 50/244, H01M 50/204, H01M 50/35, H01M 50/383

(54) **DISTRIBUTED FIRE-FIGHTING SYSTEM AND ENERGY STORAGE SYSTEM**

(30) Priority: 25.04.2023 CN 202320958555 U; 03.04.2024 CN 202420674588 U
(71) Applicant: D-Aus Energy Storage Technology (Xi'an) Co., Ltd, Xi' An, Shaanxi 710075 (CN)
(72) Inventor: LEI, Zhengjun, Xi'an, Shaanxi 710075 (CN); HAN, Xiaoyu, Xi'an, Shaanxi 710075 (CN); CHEN, Mengqi, Xi'an, Shaanxi 710075 (CN)
(74) Representative: Inchingalo, Simona
(86) International application number: PCT/CN2024/087124
(87) International publication number: WO 2024/222462

(57) **Abstract**

A distributed fire-fighting system and an energy storage system. The distributed fire-fighting system comprises a smoke delivery unit (12) and a smoke treatment unit, wherein smoke caused by thermal runaway of energy storage apparatuses (11) in the energy storage system is centrally delivered by means of the smoke delivery unit (12); and the smoke caused by the thermal runaway, which is delivered by the smoke delivery unit (12), is treated by means of the smoke treatment unit. In the distributed fire-fighting system, the smoke caused by thermal runaway of a plurality of energy storage apparatuses (11) is treated, and the plurality of energy storage apparatuses (11) share one smoke treatment unit.

## Description

### Technical Field

The present application belongs to the field of energy storage batteries, and particularly relates to a distributed fire-fighting system and an energy storage system.

### Background

With the development of solar energy, wind energy and other new energy sources, energy storage technologies have improved accordingly. As lithium batteries have the advantages of high energy, long service life, high rated voltage, high power tolerance and low self-discharge rate, they have gradually become mainstream products for energy storage.

The large-scale application of energy storage systems of lithium batteries has led to more attention to safe use of the lithium batteries. Due to crowding of battery modules in an energy storage apparatus, under influence of battery overcharge and overdischarge, overheating, mechanical collision, and other factors, battery diaphragm collapse and internal short circuit may be easily caused, resulting in thermal runaway and generation of thermal runaway smoke. This thermal runaway smoke is easy to burn when it comes into contact with air, and even leads to explosion in severe cases, causing potential safety hazards.

An existing energy storage system generally includes a plurality of energy storage apparatuses. To avoid the potential safety hazards as much as possible, each of the energy storage apparatuses is equipped with a thermal runaway smoke processing unit. The thermal runaway smoke processing unit processes thermal runaway smoke generated by a thermal runaway battery in the energy storage apparatus. However, a possibility of thermal runaway of battery modules in the energy storage apparatuses is very small, and most smoke processing units do not work in entire service cycles of the energy storage apparatuses. Thus, each of the energy storage apparatuses is equipped with a smoke processing unit, causing higher cost of the entire energy storage system.

### Summary

Some embodiments of the present application are to solve a problem of higher cost of existing energy storage systems. In an embodiment of the present application, a distributed fire-fighting system and an energy storage system are provided.

In an embodiment, the technical solution of the present application is as follows:

The distributed fire-fighting system includes a smoke conveying unit and a smoke processing unit. The smoke conveying unit is configured for gathering thermal runaway smoke of each of energy storage apparatuses in an energy storage system into the smoke processing unit. The smoke processing unit is configured for processing the thermal runaway smoke of each of the energy storage apparatuses in a centralized manner.

In an embodiment, the smoke processing unit is mainly configured for reducing a content of a combustible material in the thermal runaway smoke.

In an embodiment, the smoke processing unit includes at least one of a liquid processing device, a solid processing device, a smoke cooling device, and a gas generating device. The liquid processing device is mainly configured for processing an electrolyte in the thermal runaway smoke. The smoke cooling device is mainly configured for cooling the thermal runaway smoke and collecting the electrolyte in the thermal runaway smoke. The solid processing device is mainly configured for processing combustible gas in the thermal runaway smoke. The gas generating device is configured for generating flame-retardant gas to reduce a concentration of the combustible material in the thermal runaway smoke.

In an embodiment, the liquid processing device includes at least one liquid processing tank. The at least one liquid processing tank is filled with an alkaline solution.

In an embodiment, the alkaline solution is a NaOH solution of 0.05 mol/L to 0.5 mol/L.

In an embodiment, the smoke processing unit includes the liquid processing device and the solid processing device that are arranged sequentially. The liquid processing device includes at least one liquid processing tank, and the liquid processing tank is filled with an alkaline solution. The solid processing device includes at least one solid processing tank, and the at least one solid processing tank is filled with activated carbon.

In an embodiment, the smoke conveying unit includes a main smoke pipeline and a plurality of branch smoke pipelines. Each of the plurality of branch smoke pipelines is configured for being connected to the energy storage apparatus and the main smoke pipeline, and is configured for conveying the thermal runaway smoke in each of the energy storage apparatuses to the main smoke pipeline. The main smoke pipeline gathers the thermal runaway smoke in the plurality of branch smoke pipelines into the smoke processing unit. The plurality of branch smoke pipelines are provided with first one-way valves configured for allowing unidirectional circulation of the thermal runaway smoke.

In an embodiment, the plurality of branch smoke pipelines are provided with suction devices.

In an embodiment, the smoke processing unit is arranged in an empty energy storage box.

In an embodiment, the smoke processing unit includes a smoke discharge pipeline. A safe distance exists between the smoke discharge pipeline and each of the energy storage apparatuses.

In an embodiment, the smoke processing unit includes a safe room and at least one ignition device. The smoke conveying unit includes a smoke pipeline. An inlet of the smoke pipeline is located outside the safe room and is configured for being connected to a pressure relief pipe of at least one of the energy storage apparatuses. An outlet of the smoke pipeline is located inside the safe room. The ignition device is arranged in the safe room, and is configured for igniting the thermal runaway smoke discharged from the smoke pipeline in the safe room. According to the system, the ignition device is arranged in the safe room, and the ignition device is isolated from the energy storage apparatus. When the ignition device ignites the thermal runaway smoke, an open flame generated by burning is completely isolated in the safe room. Thus, batteries in the energy storage apparatuses may not be influenced, potential safety hazards caused by ignition of the thermal runaway smoke are reduced, and safety of the entire energy storage system is improved.

In order to further ensure that flames generated by ignition may not influence the batteries in the energy storage apparatuses, the safe room is isolated from the energy storage apparatuses by spatial distances. In the distributed fire-fighting system, a minimum distance between the safe room and the energy storage apparatuses is H, and the H is greater than or equal to 10 m.

In an embodiment, an exhaust fan is arranged in the smoke pipeline. The exhaust fan quickly discharges the thermal runaway smoke in the energy storage apparatus to the safe room for processing, so as to prevent the thermal runaway smoke from accumulating in the energy storage box.

In an embodiment, an adsorption device is further arranged in the safe room. The adsorption device is arranged between the smoke pipeline and the ignition device, and is configured for adsorbing the thermal runaway smoke before ignition. In this way, fewer ignition devices may be used later.

In an embodiment, the plurality of ignition devices are arranged. The smoke pipeline is provided with a flow detection device. The flow detection device turns on a corresponding quantity of the plurality of ignition devices according to a flow rate of the thermal runaway smoke in the smoke pipeline. Thus, the ignition devices may timely process the thermal runaway smoke in the smoke pipeline. Meanwhile, the plurality of ignition devices are arranged, thus ensuring reliability of ignition. When one of the ignition devices fails or malfunctions, the other ignition devices may work normally.

In an embodiment, the safe room has a concrete structure. The safe room having the concrete structure has high safety, which is able to safely isolate a burning open flame.

In an embodiment, the plurality of ignition devices include exhaust pipes, stop valves, and igniters. Inlets of the exhaust pipes are in communication with the smoke pipeline. The stop valves are arranged on the exhaust pipes, and control whether the thermal runaway smoke in the smoke pipeline passes the exhaust pipes for burning. The igniters are arranged at outlet ends of the exhaust pipes. In an embodiment, the igniters are pulse igniters.

In another embodiment of the present application, an energy storage system is provided. The energy storage system includes a plurality of energy storage apparatuses and the distributed fire-fighting system according to any one of the above descriptions. The energy storage apparatuses include energy storage boxes and a plurality of battery modules arranged in the energy storage boxes. Thermal runaway smoke generated by each of the plurality of battery modules is conveyed to a smoke processing unit through a smoke conveying unit.

In an embodiment, the battery modules include a plurality of battery cells. Inner cavities of the plurality of battery cells are in communication with each other through shared cavities. The shared cavities are connected to pressure relief pipes. All of the pressure relief pipes are in communication with branch smoke pipelines.

In yet another embodiment of the present application, an energy storage system is provided. The energy storage system includes a plurality of energy storage apparatuses, pressure relief pipes, and the distributed fire-fighting system according to any one of the above descriptions. The energy storage apparatuses include energy storage boxes and a plurality of batteries arranged in the energy storage boxes. Thermal runaway smoke generated by each of the plurality of batteries is input into a smoke pipeline through the pressure relief pipes. The distributed fire-fighting system may process the thermal runaway smoke generated by the plurality of energy storage apparatuses. In solutions of the related art, a fire-fighting system is separately arranged for each energy storage apparatus. Compared with that, the distributed fire-fighting system may reduce a quantity of ignition devices to a certain extent and reduce fire-fighting cost of the energy storage system.

In an embodiment, the pressure relief pipes are further provided with one-way valves. The one-way valves are configured for preventing the thermal runaway smoke in the smoke pipeline from entering the energy storage apparatuses without thermal runaway and influencing the normal energy storage apparatuses without thermal runaway.

In an embodiment, the plurality of energy storage apparatuses are arranged according to actual needs. The plurality of energy storage apparatuses are arranged linearly. Safe rooms are located at tail ends of the plurality of energy storage apparatuses.

In an embodiment, the batteries are large-capacity batteries formed by connecting a plurality of battery cells in parallel. The plurality of battery cells are in communication with each other through shared pipelines. The pressure relief pipes are connected to explosion venting valves arranged on the shared pipelines.

Compared with the related art, the technical solution of the present application has the following advantages:
1. In an embodiment of the present application, a distributed fire-fighting system is provided. The distributed fire-fighting system includes the smoke conveying unit and the smoke processing unit. The smoke conveying unit gathers the thermal runaway smoke generated by each of the energy storage apparatuses in the energy storage system in a centralized manner. The smoke processing unit processes the thermal runaway smoke conveyed by the smoke conveying unit. The distributed fire-fighting system processes the thermal runaway smoke generated by the plurality of energy storage apparatuses in the energy storage system in a centralized manner, and the plurality of energy storage apparatuses share one smoke processing unit. In this way, use safety of the energy storage apparatuses may be improved, and manufacturing cost of the entire energy storage system may be greatly reduced.
2. In the distributed fire-fighting system of the embodiment of the present application, the smoke processing unit is mainly configured for reducing the content of the combustible material (such as the electrolyte and the combustible gas) in the thermal runaway smoke, such that the thermal runaway smoke may not be burned. The smoke processing unit may ensure that the processed thermal runaway smoke does not burn after making contact with air, and improve safety of the entire energy storage system.
3. In the distributed fire-fighting system of the embodiment of the present application, the smoke processing unit includes at least one of the liquid processing device, the solid processing device, the smoke cooling device, and the gas generating device. The smoke processing unit processes the thermal runaway smoke generated by the energy storage apparatuses in various ways, so as to reduce the content of the combustible material in the thermal runaway smoke.
4. In the distributed fire-fighting system of the embodiment of the present application, the liquid processing device includes the at least one liquid processing tank. The at least one liquid processing tank is filled with the alkaline solution. The alkaline solution may fully process the electrolyte carried in the thermal runaway smoke, so as to prevent the vaporized electrolyte from continuing to decompose to generate the combustible gas. Meanwhile, the alkaline solution may process part of gas in the thermal runaway smoke, and a gas volume of the thermal runaway smoke processed through the alkaline solution is greatly reduced. The effect is remarkable after processing with the alkaline solution of the NaOH solution of 0.05 mol/L to 0.5 mol/L.
5. In the distributed fire-fighting system of the embodiment of the present application, the smoke processing unit includes the liquid processing device and the solid processing device that are arranged sequentially. This combination mode may fully process the thermal runaway smoke. The processed gas is non-combustible and harmless and may be directly discharged.
6. In the distributed fire-fighting system of the embodiment of the present application, the branch smoke pipelines are provided with the first one-way valves configured for allowing unidirectional circulation of the thermal runaway smoke. The first one-way valves may prevent the thermal runaway smoke in the main smoke pipeline from entering the energy storage apparatuses without thermal runaway, thus improving safety of the energy storage system.
7. In the distributed fire-fighting system of the embodiment of the present application, the branch smoke pipelines are provided with the suction devices. The suction devices actively suck the thermal runaway smoke in the energy storage apparatuses to the main smoke pipeline in time, so as to prevent the thermal runaway smoke generated by thermal runaway batteries in the energy storage apparatuses from influencing the battery modules without thermal runaway. Thus, safety of the energy storage apparatuses is improved.
8. In the distributed fire-fighting system of the embodiment of the present application, the smoke processing unit includes the smoke discharge pipeline. The safe distance exists between the smoke discharge pipeline and the energy storage apparatuses. The smoke processing unit has lowest manufacturing cost.
9. In the distributed fire-fighting system of the embodiment of the present application, the smoke processing unit is arranged in the empty energy storage box. The energy storage box may provide safety protection for the smoke processing unit and prolong service life of the smoke processing unit. Meanwhile, this arrangement makes the entire energy storage system easy to standardize and modularize, facilitates on-site management and maintenance, and also achieves better appearance.
10. In the distributed fire-fighting system of the embodiment of the present application, the ignition device is arranged in the safe room, and the ignition device is isolated from the energy storage apparatus. When the ignition device processes the thermal runaway smoke, the open flame generated by burning is completely isolated in the safe room. Thus, the energy storage apparatuses and surroundings may not be influenced, the potential safety hazards caused by ignition of the thermal runaway smoke are reduced, and safety of the entire energy storage system is improved.
11. In the distributed fire-fighting system provided by the embodiment of the present application, the ignition devices and the energy storage apparatuses are arranged separately. The energy storage apparatuses are convenient to standardize and modularize, and on-site management and maintenance are facilitated.
12. The distributed fire-fighting system provided by the embodiment of the present application may process the thermal runaway smoke generated by the plurality of energy storage apparatuses. In solutions of the related art, a fire-fighting system is separately arranged for each energy storage apparatus. Compared with that, the distributed fire-fighting system may reduce a quantity of ignition devices to a certain extent and reduce fire-fighting cost of the energy storage system.

### Brief Description of the Drawings

Fig. 1 is a schematic diagram of matching between a distributed fire-fighting system and an energy storage system in Example 1;
Fig. 2 is a schematic diagram of a smoke processing unit in Example 1;
Fig. 3 is a schematic structural diagram of a liquid processing device in Example 1;
Fig. 4 is a schematic diagram of a smoke processing unit in Example 2;
Fig. 5 is a schematic diagram of a smoke processing unit in Example 3;
Fig. 6 is a schematic structural diagram of a gas generating device in Example 3;
Fig. 7 is a schematic diagram of a smoke processing unit in Example 4;
Fig. 8 is a schematic diagram of a smoke processing unit in Example 5;
Fig. 9 is a schematic diagram of a smoke processing unit in Example 6;
Fig. 10 is a schematic diagram of an energy storage system in Example 7;
Fig. 11 is a schematic structural diagram of an energy storage apparatus in Example 7.
Fig. 12 is a first schematic diagram of a distributed fire-fighting system and an energy storage system in Example 8 and Example 9;
Fig. 13 is a second schematic diagram of a distributed fire-fighting system and an energy storage system in Example 8 and Example 9;
Fig. 14 is a second schematic diagram of a distributed fire-fighting system and an energy storage system in Example 8 and Example 9;
Fig. 15 is a schematic diagram of an energy storage apparatus in Example 9;
Fig. 16 is a first schematic structural diagram of large-capacity batteries of an energy storage apparatus in Example 9; and
Fig. 17 is a second schematic structural diagram of large-capacity batteries of an energy storage apparatus in Example 9.

Reference numerals: 11-energy storage apparatus, 12-smoke conveying unit, 13-liquid processing device, 14-solid processing device, 15-gas generating device, 16-smoke discharge pipeline, 17-smoke cooling device, 111-energy storage box, 112-battery module, 113-pressure relief pipe, 121-main smoke pipeline, 122-branch smoke pipeline, 123-first one-way valve, 124-suction device, 131-liquid processing tank, 132-smoke inlet pipeline, 133-three-way valve, 134-flow division member, 141-solid processing tank, 151-first tank, 152-second tank, 153-gas inlet pipeline, 154-gas outlet, 155-opening, 156-isolation member, 157-second one-way valve, 171-cooling processing tank, 21-energy storage apparatus, 22-safe room, 23-smoke pipeline, 24-pressure relief pipe, 25-ignition device, 26-exhaust fan, 27-adsorption device, 28-flow detection device, 29-one-way valve, 211-energy storage box, 212-battery, 213-shared pipeline, 214-explosion venting valve, 251-exhaust pipe, 252-igniter, and 253-stop valve.

### Detailed Description of the Embodiments

To make the above objective, features, and advantages of the present application more obvious and comprehensible, specific embodiments of the present application will be described in detail below with reference to the accompanying drawings of the description. Obviously, the described examples are some examples rather than all the examples of the present application. Based on the examples of the present application, all other examples obtained by those of ordinary skill in the art without making creative efforts should fall within the protection scope of the present application.

The present application provides a distributed fire-fighting system. The distributed fire-fighting system is mainly applied to an energy storage system. The energy storage system includes a plurality of energy storage apparatuses. Each of the energy storage apparatuses includes an energy storage box and a plurality of battery modules arranged in the energy storage box. The plurality of battery modules are connected in series, in parallel or in series and parallel to satisfy capacity requirements of the energy storage apparatuses. The distributed fire-fighting system includes a smoke conveying unit and a smoke processing unit. The smoke conveying unit is configured for gathering thermal runaway smoke of each of the energy storage apparatuses into the smoke processing unit. The smoke processing unit is configured for processing the thermal runaway smoke conveyed by the smoke conveying unit, such that the processed thermal runaway smoke may not influence the energy storage apparatuses.

The distributed fire-fighting system processes the thermal runaway smoke generated by the plurality of energy storage apparatuses in the energy storage system. The plurality of energy storage apparatuses share one smoke processing unit. In solutions of the related art, a smoke processing unit is separately arranged for each energy storage apparatus. Compared with that, the distributed fire-fighting system may improve use safety of the energy storage apparatuses, and reduce a quantity of smoke processing units, such that manufacturing cost of the entire energy storage system is greatly reduced. In an embodiment, the smoke processing unit is arranged separately from the energy storage apparatuses, such that arrangement and mounting of devices in the energy storage apparatuses may be facilitated, a space use ratio of interiors of the energy storage boxes may be improved, and integration of the energy storage apparatuses may be facilitated. In an embodiment, capacities of the energy storage apparatuses may be improved.

### Example 1

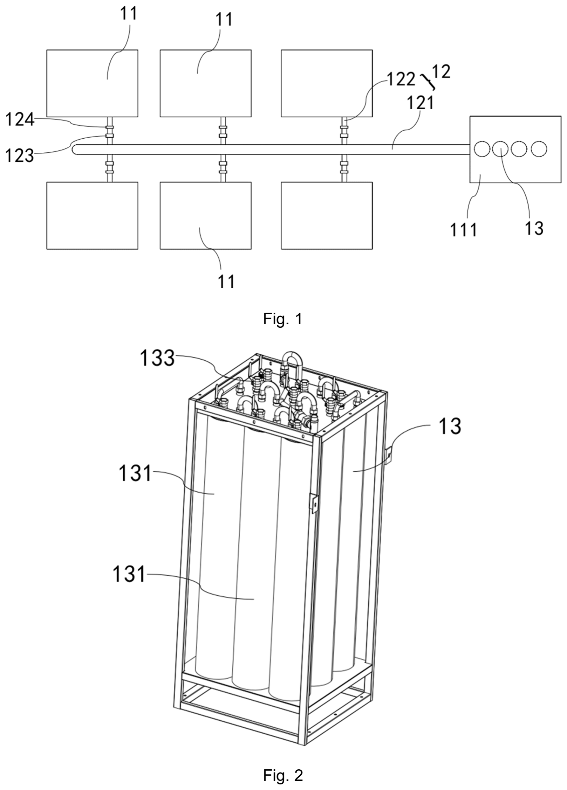

As shown in Fig. 1, a distributed fire-fighting system provided by the example includes a smoke conveying unit 12 and a smoke processing unit. The smoke conveying unit 12 is configured for gathering thermal runaway smoke of each of energy storage apparatuses 11 into the smoke processing unit. The smoke processing unit is configured for processing the thermal runaway smoke of each of the energy storage apparatuses 11.

As shown in Fig. 1, the smoke conveying unit 12 includes a main smoke pipeline 121 and a plurality of branch smoke pipelines 122. One end of each of the branch smoke pipelines 122 is configured for being connected to the energy storage apparatus 11, and the other end of each of the branch smoke pipelines is connected to the main smoke pipeline 121 and is configured for conveying the thermal runaway smoke in each of the energy storage apparatuses 11 to the main smoke pipeline 121. The main smoke pipeline 121 is connected to the smoke processing unit, and gathers the thermal runaway smoke in the plurality of branch smoke pipelines 122 into the smoke processing unit. The smoke processing unit is configured for processing the thermal runaway smoke conveyed by the main smoke pipeline 121, such that the thermal runaway smoke discharged from the energy storage apparatuses 11 may not influence the energy storage apparatuses 11.

As shown in Fig. 1, in the distributed fire-fighting system of the example, the branch smoke pipelines 122 is provided with first one-way valves 123 configured for allowing unidirectional circulation of the thermal runaway smoke. After the first one-way valves 123 are mounted, the thermal runaway smoke in the energy storage apparatuses 11 may flow into the main smoke pipeline 121 through the branch smoke pipelines 122. The thermal runaway smoke in the main smoke pipeline 121 may not flow into energy storage boxes 111 through the branch smoke pipelines 122. The first one-way valves 123 prevent the thermal runaway smoke in the main smoke pipeline 121 from entering the energy storage apparatuses 11 without thermal runaway, thus improving safety of the energy storage system. In an embodiment, the branch smoke pipelines 122 are provided with suction devices 124. In another embodiment, apparatuses such as ventilation fans may be configured as the suction devices 124. The suction devices 124 actively suck the thermal runaway smoke in the energy storage apparatuses 11 to exteriors of the energy storage boxes 111 in time, so as to prevent the thermal runaway smoke in the energy storage boxes 111 from influencing battery modules without thermal runaway. Further, safety of the energy storage apparatuses 11 is improved.

In an embodiment, as shown in Fig. 1, the smoke processing unit is arranged in the empty energy storage box 111. The energy storage box 111 may provide safety protection for the smoke processing unit and prolong service life of the smoke processing unit. Meanwhile, this arrangement makes the entire energy storage system easy to standardize and modularize, facilitates on-site management and maintenance, and also achieves better appearance.

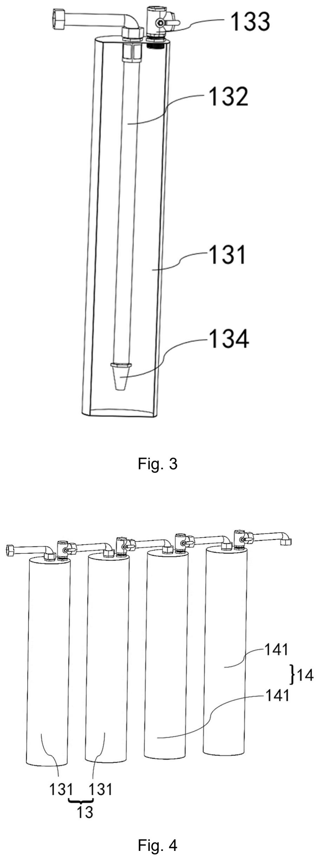

The smoke processing unit is mainly configured for reducing a content of a combustible material in the thermal runaway smoke. In an embodiment, the combustible material is a material that is combustible in the thermal runaway smoke, which mainly includes an electrolyte and combustible gas. As shown in Fig. 3, the smoke processing unit in the example includes a liquid processing device 13. The liquid processing device 13 is connected to an outlet of the main smoke pipeline 121, and is mainly configured for fully processing the electrolyte carried in the thermal runaway smoke, so as to prevent the vaporized electrolyte from continuing to decompose to generate the combustible gas. Further, the content of the combustible material (the electrolyte and the combustible gas) in the thermal runaway smoke is reduced.

As shown in Fig. 2 and Fig. 3, the liquid processing device 13 includes at least one liquid processing tank 131. The liquid processing tank 131 is filled with a liquid processing medium. A quantity of liquid processing tanks 131 may be set according to a quantity and a requirement of the energy storage apparatuses 11 in the energy storage system. If a plurality of liquid processing tanks 131 are provided, the plurality of liquid processing tanks 131 may be connected in series. A shape of the liquid processing tanks 131 is not limited, which may be rectangular tanks, circular tanks, elliptical tanks, etc. The circular tanks are optimally used. The circular tanks have high pressure-bearing performance.

As shown in Fig. 3, the liquid processing tank 131 is provided with a smoke inlet and a smoke outlet. The smoke inlet is configured for inputting the thermal runaway smoke into the liquid processing tank 131. The smoke outlet is configured for discharging the processed thermal runaway smoke. In an embodiment, the smoke inlets are able to be provided at tops of the liquid processing tanks or bottoms of the liquid processing tanks. In an embodiment, in order to facilitate connection of all the liquid processing tanks 131, the smoke inlets and the smoke outlets are provided at the tops of the liquid processing tanks 131. In this case, connection may be performed at only the tops of all the liquid processing tanks 131, such that connectivity of the entire smoke processing unit and compactness of pipeline arrangement are improved.

As shown in Fig. 3, the smoke inlets are provided at the tops of the liquid processing tanks, in order to enable the thermal runaway smoke to make full contact with the liquid processing media in the liquid processing tanks 131, the smoke inlets are connected to smoke inlet pipelines 132, and at least part of the smoke inlet pipelines 132 may be immersed in the liquid processing media. In an embodiment, the smoke inlet pipelines 132 extend to the bottoms of the liquid processing tanks 131 and may be completely immersed in the liquid processing media. When the thermal runaway smoke passes the liquid processing tanks 131, the thermal runaway smoke makes full contact with the liquid processing media in the liquid processing tanks 131. The liquid processing media fully process the thermal runaway smoke, such that a processing effect of the liquid processing media is improved.

As shown in Fig. 3, ends of the smoke inlet pipelines 132 immersed in the liquid processing media are provided with flow division members 134. The flow division members 134 disperse and divide the thermal runaway smoke, and then the thermal runaway smoke reacts with the liquid processing media in the liquid processing tanks 131, such that the thermal runaway smoke flows in at a high flow rate and flows out at a low flow rate, which is conducive to dispersion of the thermal runaway smoke. Thus, the thermal runaway smoke makes full contact with and reacts with the liquid processing media, and the processing effect of the liquid processing media is improved. In an embodiment, the flow division members 134 are copper foam columns. During mounting, the flow division members are fixed to openings of the ends of the smoke inlet pipelines 132 immersed in the liquid processing media. Copper foam is a structure with a large number of three-dimensional holes in a copper matrix, and has functions of dispersing and buffering fluid. During use, the copper foam columns are processed into columnar structures. The thermal runaway smoke passing the smoke inlet pipelines 132 flows out of the copper foam columns, and then flows out through side walls or bottoms of the copper foam columns, such that the thermal runaway smoke may be dispersed and buffered. In this way, the divided thermal runaway smoke may make full contact with the liquid processing media.

As shown in Fig. 2 and Fig. 3, in an embodiment, in order to facilitate injection of the liquid processing media and pressure elevation for leak detection of the liquid processing tanks 131, the smoke outlets are provided with three-way valves 133. In an embodiment, three-way ball valves are the three-way valves 133. The three-way valves 133 may enable filling of the liquid processing media after pressure elevation of all the liquid processing tanks 131 is completed. In specific connection, first ports of the three-way valves 133 are connected to the smoke outlets, second ports of the three-way valves are configured for connecting adjacent liquid processing tanks, and third ports of the three-way valves are configured for injecting the liquid processing media.

The liquid processing tanks 131 are filled with the liquid processing media. The liquid processing media are mainly configured for fully processing the electrolyte carried in the thermal runaway smoke, so as to prevent the vaporized electrolyte from continuing to decompose to generate the combustible gas. Further, the content of the combustible material (the electrolyte and the combustible gas) in the thermal runaway smoke is reduced. The liquid processing media may specifically use the following materials:
In an embodiment, the liquid processing media is organic solvents. According to a principle that like dissolves like, the organic solvents may fully process the electrolyte carried in the thermal runaway smoke, and may also prevent the vaporized electrolyte from continuing to decompose. The organic solvents are specifically ester solvents, alcohol solvents, or aldehyde solvents. In some embodiments, the ester solvents may be diethyl phthalate solvents, methyl salicylate solvents, ethyl acetate solvents, or butyl acetate solvents. In some embodiments, the alcohol solvents may be benzyl alcohol solvents, isoamyl alcohol solvents, isobutanol solvents, isopropanol solvents, isooctyl alcohol solvents, n-propanol solvents, or cyclohexanol solvents. The aldehyde solvents may be benzaldehyde solvents, heptaldehyde, phenylpropyl aldehyde, or methyl nonyl acetaldehyde.

In another embodiment, the liquid processing media are alkaline solutions. In an embodiment, the alkaline solutions may be sodium hydroxide aqueous solutions, potassium hydroxide aqueous solutions, barium hydroxide aqueous solutions, etc. The alkaline solutions may react with carbonate ester substances in the electrolyte, so as to prevent the vaporized electrolyte from continuing to generate harmful gas. Thus, the thermal runaway smoke may be processed to a certain extent from the root. Meanwhile, the alkaline solution may cool the thermal runaway smoke, and electrolyte vapor in the thermal runaway smoke may be fully dissolved in the alkaline solution. In an embodiment, the alkaline solution has a desirable processing effect on acid substances such as CO₂, POF₃ and HF, and may effectively process the thermal runaway smoke.

In the above two liquid processing media, the alkaline solution may not only process the electrolyte in the thermal runaway smoke, but also process gas in the thermal runaway smoke. Thus, the alkaline solutions are better than the organic solvents in processing effects.

For the alkaline solutions, the greater concentrations, the better the processing effect of the thermal runaway smoke. However, a processing effect of a low-concentration alkaline solution was better than that of a high-concentration alkaline solution. Especially when the thermal runaway smoke passed an alkaline solution of 0.05 mol/L to 0.5 mol/L, a collected gas volume was lowest, and a processing effect of the alkaline solution was better than that of alkaline solutions of 0.5 mol/L or above. Thus, when the alkaline solution was configured for processing the thermal runaway smoke, prejudice in the related art was overcome, and a low-concentration alkaline solution was configured for processing the thermal runaway smoke, such that the alkaline solution may effectively process the thermal runaway smoke.

For instance, if the alkaline solution was a NaOH solution, a large number of battery thermal runaway tests were performed. After processing effects of water and NaOH solutions having different concentrations on the thermal runaway smoke were compared in parallel, it was found that a gas volume of the thermal runaway smoke collected after processing with a NaOH solution of 0.05 mol/L to 0.5 mol/L was smallest, a processing effect with a NaOH solution of 0.1 mol/L to 0.2 mol/L was remarkable, and a processing effect with a NaOH solution of 0.1 mol/L was best.

When the thermal runaway smoke was conveyed into the NaOH solution, the NaOH solution reacted with the electrolyte, CO₂, POF₃, HF and other acid substances in the thermal runaway smoke respectively. For instance, ester in the electrolyte reacted with the NaOH solution as follows: CHOOCR+NaOH=RCOONa+CHOH. CO₂ reacted with the NaOH solution as follows: 2NaOH+CO₂=Na₂CO₃+H₂O. Then, CO₂ may react as follows: Na₂CO₃+CO₂+H₂O=2NaHCO₃. POF₃ reacted with the NaOH solution as follows: POF₃+2NaOH=NaPF₂O₂+NaF+H₂O. HF reacted with the NaOH solution as follows: NaOH+HF=NaF+H₂O. After the reactions, a volume of the thermal runaway smoke was greatly reduced.

**Table 1 Runaway data of fully-charged 32650 battery without processing**

| Battery model | Heating power (W) | Collection time after runaway (min) | Collected gas (L) | Test frequency |
|---|---|---|---|---|
| Fully-charged 32650 battery (6 Ah) | 200 | 5 min to 10 min | 4 | 10 |

**Table 2 Processing results of NaOH solutions having different concentrations**

| Battery model | Heating power (W) | NaOH concentration (mol/L) | Liquid volume (mL) | Collection volume (L) | Collection time after runaway (min) |
|---|---|---|---|---|---|
| | | 0 | | 2.5 | |
| | | 0 | | 2.8 | |
| | | 0 | | 2.5 | |
| | | 0 | | 3.0 | |
| | | 0 | | 2.5 | |
| | | 0.05 | | 2.0 | |
| | | 0.05 | | 2.0 | |
| | | 0.05 | | 1.8 | |
| | | 0.05 | | 1.8 | |
| | | 0.05 | | 1.9 | |
| | | 0.1 | | 0.8 | |
| | | 0.1 | | 1.0 | |
| | | 0.1 | | 1.2 | |
| Fully-charged 32650 battery (6 Ah) | | 0.1 | | 1.0 | |
| | 200 | 0.1 | 1500 | 1.2 | 5-10 |
| | | 0.2 | | 1.5 | |
| | | 0.2 | | 1.4 | |
| | | 0.2 | | 1.5 | |
| | | 0.2 | | 1.5 | |
| | | 0.2 | | 1.5 | |
| | | 0.3 | | 1.6 | |
| | | 0.3 | | 1.8 | |
| | | 0.3 | | 1.7 | |
| | | 0.3 | | 1.6 | |
| | | 0.3 | | 1.8 | |
| | | 0.5 | | 1.9 | |
| | | 0.5 | | 1.8 | |
| | | 0.5 | | 1.8 | |
| | | 0.5 | | 1.9 | |
| | | 0.5 | | 1.9 | |
| | | 0.7 | | 2.0 | |
| | | 0.7 | | 2.1 | |
| | | 0.7 | | 2.1 | |
| | | 0.7 | | 2.0 | |
| | | 0.7 | | 2.0 | |
| | | 1.0 | | 2.3 | |
| | | 1.0 | | 2.3 | |
| | | 1.0 | | 2.4 | |
| | | 1.0 | | 2.2 | |
| | | 1.0 | | 2.3 | |
| | | 1.5 | | 2.4 | |
| | | 1.5 | | 2.5 | |
| | | 1.5 | | 2.5 | |
| Fully-charged 32650 battery (6 Ah) | 200 | 1.5 | 1500 | 2.5 | 5-10 |
| | | 1.5 | | 2.4 | |
| | | 2.0 | | 3.0 | |
| | | 2.0 | | 2.8 | |
| | | 2.0 | | 2.9 | |
| | | 2.0 | | 3.0 | |
| | | 2.0 | | 2.8 | |

According to the test data, it was found that when the thermal runaway smoke of the fully-charged 32650 battery after thermal runaway was not processed, the collected gas volume was 4 L. When the thermal runaway smoke of the fully-charged 32650 battery after thermal runaway passed the NaOH solution of 0.5 mol/L or above, the collected gas volume was generally greater than 2 L, resulting in a unsatisfactory processing effect. After the thermal runaway smoke of the fully-charged 32650 battery after thermal runaway passed the NaOH solution of 0.05 mol/L to 0.5 mol/L, the gas volume was lower and was 2 L or below. An effect after processing with a NaOH solution of 0.1 mol/L to 0.2 mol/L was remarkable. The collected gas volume after processing with the NaOH solution of 0.1 mol/L was lowest and was only about 1 L, which was the best effect. Thus, the NaOH solution of 0.05 mol/L to 0.5 mol/L had a desirable processing effect on the thermal runaway smoke of the battery after thermal runaway.

### Example 2

As shown in Fig. 4, a distributed fire-fighting system provided by the example is similar to the distributed fire-fighting system in Example 1. Different from Example 1, a smoke processing unit in the example includes a liquid processing device 13 and a solid processing device 14 that are arranged sequentially. The test results in Example 1 showed that an alkaline solution having a certain concentration may effectively process thermal runaway smoke, so as to greatly reduce a volume of the processed thermal runaway smoke. Based on this, the solid processing device 14 may be configured for processing remaining gas, such that the processed thermal runaway smoke does not burn at all.

As shown in Fig. 4, the solid processing device 14 is arranged at a back end of the liquid processing device 13 and is configured for processing the thermal runaway smoke processed by the liquid processing device 13. The solid processing device 14 includes at least one solid processing tank 141. A quantity of solid processing tanks 141 may be set according to a quantity and a requirement of energy storage apparatuses 11 in an energy storage system. In an embodiment, a plurality of solid processing tanks 141 are provided, the plurality of solid processing tanks 141 are connected in series. In this case, a smoke inlet of a first solid processing tank 141 is connected to a smoke outlet of a last liquid processing tank 131 in the liquid processing device 13. A specific structure of the solid processing tanks 141 is similar to that of the liquid processing tanks 131. The solid processing tanks are filled with solid adsorption media, which are configured for processing the thermal runaway smoke processed by the liquid processing tanks 131.

In an embodiment, the solid adsorption media in the solid processing tanks 141 may be activated carbon, graphene, carbon nanotubes, graphite, aluminum oxide, montmorillonite, silicate, phosphate, or cellular glass, and are configured for processing residual gas after processing of the liquid processing tanks 131, and for instance, adsorbing redundant H₂, CO, methane, ethylene, etc. In an embodiment, in the solid adsorption media, the activated carbon having lower cost and a better processing effect is selected. Generally, activated carbon having a high iodine value or modified activated carbon is selected. This kind of activated carbon may easily adsorb small-molecular-weight gas in the thermal runaway smoke, and for instance, may easily react with hydrogen, methane, etc.

**Table 4 Adsorption test of combination of NaOH solution and activated carbon**

| Battery model | Heating power (W) | NaOH concentration (mol/L) | Liquid volume (mL) | Activated carbon mass (g) | Collection time after runaway (min) | Collection volume (L) | Combustible or non-combustible |
|---|---|---|---|---|---|---|---|
| Fully-charged 32650 battery (6 Ah) | | | | 90 | | 1.0 | Combustible |
| | | | | 90 | | 1.0 | Combustible |
| | | | | 90 | | 0.8 | Combustible |
| | 200 | 0.1 | 1500 | 90 | 5-10 | 1.0 | Combustible |
| | | | | 90 | | 1.0 | Combustible |
| | | | | 180 | | 0.8 | Combustible |
| | | | | 180 | | 0.7 | Combustible |
| | | | | 180 | | 0.8 | Combustible |
| | | | | 180 | | 0.9 | Combustible |
| | | | | 180 | | 0.8 | Combustible |
| | | | | 270 | | 0.5 | Non-combustible |
| | | | | 270 | | 0.3 | Non-combustible |
| | | | | 270 | | 0.3 | Non-combustible |
| | | | | 270 | | 0.4 | Non-combustible |
| | | | | 270 | | 0.5 | Non-combustible |
| | | | | 360 | | 0.3 | Non-combustible |
| | | | | 360 | | 0.3 | Non-combustible |
| | | | | 360 | | 0.2 | Non-combustible |
| | | | | 360 | | 0.3 | Non-combustible |
| | | | | 360 | | 0.3 | Non-combustible |

Through the test data, it was found that the NaOH solution and the activated carbon (P-B-3 activated carbon of a No.1 gas particulate filter tank) had desirable effects of processing the thermal runaway smoke of batteries after thermal runaway. After many tests, it was found that thermal runaway smoke of a fully-charged 32650 battery after runaway was first processed through 1500 mL of a NaOH solution of 0.1 mol/L, and then absorbed by 270 g of activated carbon. The collected gas volume was 0.3 L to 0.5 L, and the collected gas was non-combustible.

The smoke processing unit in the example guides the thermal runaway smoke generated by thermal runaway of the battery into the liquid processing tanks 131 for processing, and the liquid processing tanks 131 perform targeted processing on an electrolyte and part of gas carried in the thermal runaway smoke of the battery, so as to prevent the vaporized electrolyte from continuing to decompose to generate gas. Thus, gas output of the thermal runaway smoke of the battery is reduced, and then the solid processing tanks 141 may complete processing of the thermal runaway smoke through fewer solid adsorption media. Meanwhile, the processed gas is non-combustible, which improves safety of the energy storage apparatuses.

### Example 3

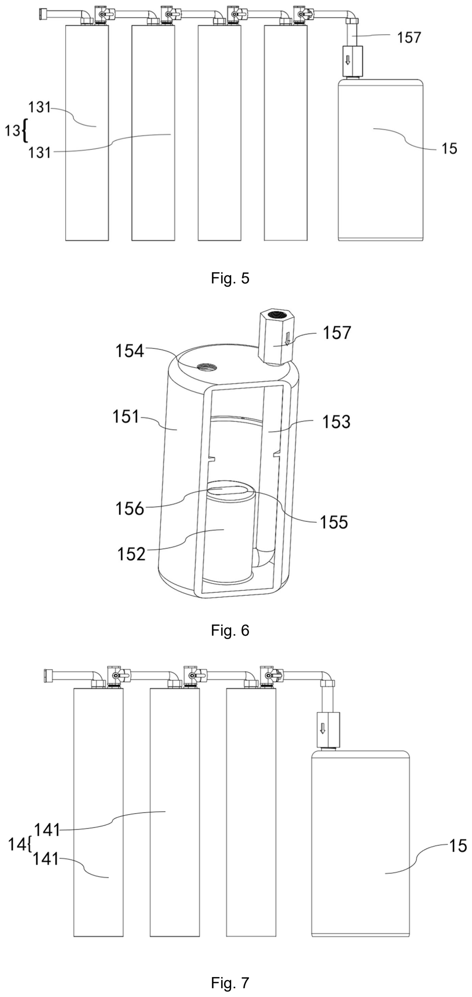

As shown in Fig. 5, a distributed fire-fighting system provided by the example is similar to the distributed fire-fighting system in Example 1. Different from Example 1, a smoke processing unit in the example includes a liquid processing device 13 and a gas generating device 15 that are arranged sequentially. The test results in Example 1 showed that an alkaline solution having a certain concentration may effectively process thermal runaway smoke, so as to greatly reduce a volume of the processed thermal runaway smoke. Based on this, a back end of the liquid processing device 13 is connected to the gas generating device 15, and the gas generating device 15 generates flame-retardant gas and mixes the flame-retardant gas with the thermal runaway smoke processed by the liquid processing device 13. In this way, a concentration of combustible gas in the thermal runaway smoke is reduced, and the mixed gas may hardly have potential safety hazards such as burning or explosion when making contact with air due to a small concentration of the combustible gas.

As shown in Fig. 6, the gas generating device 15 in the example includes at least one gas generating tank. The gas generating tank includes a first tank 151, a second tank 152, and a gas inlet pipeline 153. The first tank 151 is provided with a gas outlet 154 that is in communication with an inner cavity of the first tank. The second tank 152 is arranged in the first tank 151, and the second tank 152 is provided with an opening 155. The opening 155 is provided with an isolation member 156, and the isolation member 156 is configured for isolating inner cavities of the first tank 151 and the second tank 152. The gas inlet pipeline 153 is mainly configured for conveying the thermal runaway smoke processed by the liquid processing device 13 into the second tank 152. When the gas inlet pipeline 153 is mounted, a top of the second tank 152 is provided with a through hole. An inlet end of the gas inlet pipeline 153 extends to an exterior of the first tank 151 and is connected to a smoke outlet of a last liquid processing tank 131 in the liquid processing device 13. An outlet end of the gas inlet pipeline is in communication with the inner cavity of the second tank 152. In an embodiment, an inlet of the gas inlet pipeline 153 is provided with a second one-way valve 157, and the second one-way valve 157 may build pressure of the thermal runaway smoke in the second tank 152. Thus, the thermal runaway smoke may smoothly open the isolation member 156 on the second tank 152. Meanwhile, the second one-way valve 157 prevents the thermal runaway smoke from flowing back to the liquid processing device 13 and influencing liquid processing media in the liquid processing device 13.

The first tank 151 accommodates a first reaction medium, and the second tank 152 accommodates a second reaction medium. After pressure in the second tank 152 reaches a set value, the isolation member 156 is opened, and the first reaction medium makes contact with and reacts with the second reaction medium to generate the flame-retardant gas. The flame-retardant gas and the thermal runaway smoke are discharged from the gas outlet 154 on the first tank 151 after being mixed. A ratio of the combustible gas to the discharged mixed gas is greatly reduced, such that burning or explosion may hardly occur after the mixed gas makes contact with air.

The example does not limit a shape of the first tank 151, which may be a rectangular tank, a circular tank, an elliptical tank, etc. In an embodiment, the first tank 151 is a circular tank. The circular tank has high pressure-bearing performance. A specific position of the gas outlet 154 on the first tank 151 is not limited, as long as the mixed gas may be discharged. In order to ensure smooth discharge of the mixed gas, the gas outlet 154 is optimally provided at a top of the first tank 151.

As shown in Fig. 6, the entire second tank 152 is arranged in the first tank 151. Similarly, a shape of the second tank 152 is not limited, which may be a rectangular tank, a circular tank, an elliptical tank, etc. Similar to the first tank 151, the second tank 152 is a circular tank. Meanwhile, for convenience of manufacturing and mounting, the second tank 152 uses a cylindrical structure having an open bottom. During mounting, an open bottom end is fixedly mounted at a bottom of the first tank 151, and the open bottom end is sealed by a bottom plate of the first tank 151.

The second tank 152 is provided with an opening 155 that is in communication with the inner cavity of the second tank. The opening 155 is provided with the isolation member 156. In an embodiment, the isolation member 156 is an isolating membrane or a pressure valve. The isolating membrane or the pressure valve has lower opening pressure. For instance, if the opening pressure is less than 0.1 MPa, the isolation member may be opened in time when the thermal runaway smoke passes the isolation member. In this case, the inner cavity of the first tank 151 is in communication with the inner cavity of the second tank 152 through the opening 155, such that the first reaction medium in the first tank 151 and the second reaction medium in the second tank 152 make contact with and react with each other through the opening 155. In an embodiment, the isolation member 156 is mounted at any position of the second tank 152, and preferably at the top of the second tank 152. In this case, the thermal runaway smoke and the flame-retardant gas in the second tank 152 may flow out of the second tank 152 very smoothly. If the isolation member 156 is arranged on a side wall or a bottom of the second tank 152, the thermal runaway smoke and the flame-retardant gas may perform pressure building in the second tank 152 and may not be discharged smoothly.

After being processed by the liquid processing media in the liquid processing tanks 131, the thermal runaway smoke enters the second tank 152, and the isolation member 156 is opened. Thus, the first reaction medium and the second reaction medium make contact with and react with each other to generate the flame-retardant gas. The flame-retardant gas is specifically non-combustible gas, and is configured for diluting the combustible gas and reducing a concentration of the combustible gas when the combustible gas is discharged. Thus, a content of the combustible gas in the thermal runaway smoke is lower than an explosion lower limit, and finally a non-combustible effect is achieved. The flame-retardant gas may specifically include inert gas, carbon dioxide gas and other gases that are not easy to burn. The best flame-retardant gas is carbon dioxide gas, which may be obtained by simple reaction and has a certain fire extinguishing effect. At a room temperature, the carbon dioxide gas may be obtained by reaction of different liquid or solid substances. According to a reaction principle, there are different placement modes:
1) the first reaction medium is water, and the second reaction medium is sodium bicarbonate and aluminum sulfate solids;
2) the first reaction medium is an aluminum sulfate solution, and the second reaction medium is a sodium bicarbonate solution;
3) the first reaction medium is a sodium bicarbonate solution, and the second reaction medium is an aluminum sulfate solid; and
4) the first reaction medium is a sodium bicarbonate solid, and the second reaction medium is an aluminum sulfate solution.

In the above modes, the optimal mode is to use water as the first reaction medium and use the sodium bicarbonate and aluminum sulfate solids as the second reaction medium. This mode facilitates separate filling and may keep its function after long-term storage.

### Example 4

As shown in Fig. 7, a distributed fire-fighting system provided by the example is similar to the distributed fire-fighting system in Example 1. Different from Example 1, a smoke processing unit in the example includes a solid processing device 14 and a gas generating device 15 that are arranged sequentially.

As shown in Fig. 7, the solid processing device 14 includes at least one solid processing tank 141. A quantity of solid processing tanks 141 may be set according to a quantity and a requirement of energy storage apparatuses 11 in an energy storage system. In an embodiment, a plurality of solid processing tanks 141 are provided, the plurality of solid processing tanks 141 are connected in series. A smoke inlet of a first solid processing tank 141 is configured for being connected to a main smoke pipeline. A specific structure and connections of the solid processing tanks 141 is similar to a structure of the liquid processing tanks in Example 1. The solid processing tanks are filled with solid adsorption media, which are mainly configured for adsorbing combustible gas in the thermal runaway smoke.

In an embodiment, the solid adsorption media in the solid processing tanks 141 may be activated carbon, graphene, carbon nanotubes, graphite, aluminum oxide, montmorillonite, silicate, phosphate, or cellular glass, and are configured for processing the combustible gas in the thermal runaway smoke, and for instance, adsorbing redundant H₂, CO, methane, ethylene, etc. In an embodiment, in the solid adsorption media, the activated carbon having lower cost and a better processing effect is selected. Generally, activated carbon having a high iodine value or modified activated carbon is selected. This kind of activated carbon may easily adsorb small-molecular-weight gas in the thermal runaway smoke, and for instance, may easily react with hydrogen, methane, etc.

**Table 3 Absorption effect of P-B-3 activated carbon on thermal runaway smoke**

| Battery model | Heating power (W) | Activated carbon mass (g) | Collection volume (L) | Collection time after runaway (min) |
|---|---|---|---|---|
| | | 90 | 3.4 | |
| | | 90 | 3.5 | |
| | | 90 | 3.5 | |
| | | 180 | 3.0 | |
| | | 180 | 3.0 | |
| Fully-charged 32650 battery (6 Ah) | 200 | 180 | 3.0 | 5-10 |
| | | 270 | 2.5 | |
| | | 270 | 2.5 | |
| | | 270 | 2.5 | |
| | | 360 | 2.2 | |
| | | 360 | 2.1 | |
| | | 360 | 2.2 | |

When the thermal runaway smoke of a fully-charged 32650 battery after runaway was not processed, the collected gas volume was 4 L, and the collected gas volume may be reduced to about 2 L after the thermal runaway smoke was processed through the activated carbon. Through the test, it was found that the solid processing device 14 may effectively process the thermal runaway smoke, so as to greatly reduce a volume of the processed thermal runaway smoke. Based on this, a back end of the solid processing device 14 was connected to the gas generating device 15, and the gas generating device 15 generated flame-retardant gas and mixed the flame-retardant gas with the thermal runaway smoke processed by the solid processing device 14. In this way, a concentration of the combustible gas in the thermal runaway smoke was reduced, and the mixed gas may hardly have potential safety hazards such as burning or explosion when making contact with air due to a small concentration of the combustible gas.

In an embodiment, reference may be made to the structure in Example 3 for details of the gas generating device 15, which will not be described in detail herein. During specific connection, an inlet of a gas inlet pipeline 153 on a gas generating tank was connected to a smoke outlet of a last solid processing tank 141 in the solid processing device 14. The thermal runaway smoke first entered the solid processing device 14 for processing, and then the remaining thermal runaway smoke passed the gas generating tank. The gas generating tank generated the flame-retardant gas, and the flame-retardant gas and the remaining thermal runaway smoke were mixed and discharged.

In other examples, the gas generating device 15 is an existing aerosol smoke generating device or an inert gas generating device.

### Example 5

A distributed fire-fighting system provided by the example is similar to the distributed fire-fighting system in Example 1. Different from Example 1, a smoke processing unit in the example includes a smoke cooling device 17 and a solid processing device 14.

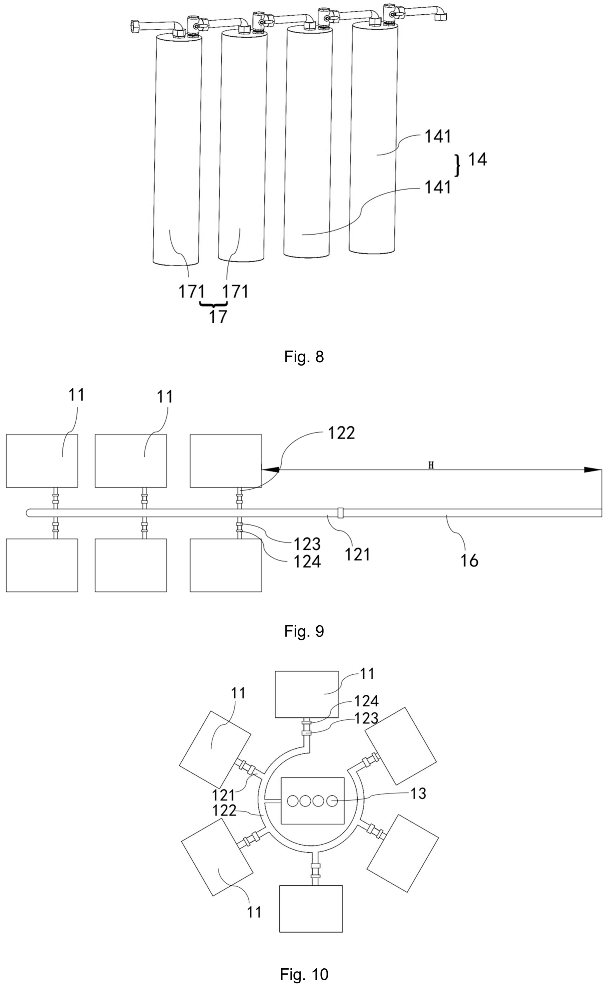

As shown in Fig. 8, the smoke cooling device 17 is configured for cooling the thermal runaway smoke, and includes at least one cooling processing tank 171. Each cooling processing tank 171 is provided with a smoke inlet and a smoke outlet. In an embodiment, a plurality of cooling processing tanks 171 are provided, the plurality of cooling processing tanks 171 are connected in series. In this case, a smoke inlet of a first cooling processing tank 171 is connected to a main smoke pipeline 121, and the cooling processing tank 171 is filled with a cooling medium configured for cooling the thermal runaway smoke. The cooling medium may be a ceramic ball, silicon dioxide, aluminum oxide, zirconium oxide, titanium oxide, a graphite rod, porous ceramics, etc. When the thermal runaway smoke passes the cooling processing tank 171, an electrolyte carried in the thermal runaway smoke is cooled into a liquid state after passing the cooling medium and collected in the cooling processing tank 171. Thus, a concentration of a combustible material in the thermal runaway smoke is reduced. Meanwhile, the cooling processing tank 171 cools gas in the thermal runaway smoke, so as to reduce a temperature of the thermal runaway smoke.

The solid processing device 14 is arranged at a back end of the smoke cooling device 17 and is configured for absorbing the thermal runaway smoke processed by the smoke cooling device 17. The solid processing device 14 includes at least one solid processing tank 141. A quantity of solid processing tanks 141 may be set according to a quantity and a requirement of energy storage apparatuses 11 in an energy storage system. In an embodiment, a plurality of solid processing tanks 141 are provided, the plurality of solid processing tanks 141 are connected in series. In this case, a smoke inlet of a first solid processing tank 141 is connected to a smoke outlet of a last cooling processing tank 171 in the smoke cooling device 17. The solid processing tanks 141 are filled with solid adsorption media, and are configured for processing the thermal runaway smoke processed by liquid processing tanks 131.

In an embodiment, the solid adsorption media in the solid processing tanks 141 may be activated carbon, graphene, carbon nanotubes, graphite, aluminum oxide, montmorillonite, silicate, phosphate, or cellular glass, and are configured for processing residual gas after processing of the liquid processing tanks 131, and for instance, adsorbing redundant H₂, CO, methane, ethylene, etc. In an embodiment, in the solid adsorption media, the activated carbon having lower cost and a better processing effect is selected. Generally, activated carbon having a high iodine value or modified activated carbon is selected. This kind of activated carbon may easily adsorb small-molecular-weight gas in the thermal runaway smoke, and for instance, may easily react with hydrogen, methane, etc.

In the example, the smoke cooling device 17 is configured for collecting and processing the electrolyte in the thermal runaway smoke, and then the solid processing device 14 is configured for effectively processing the cooled thermal runaway smoke. Thus, a volume of the processed thermal runaway smoke is greatly reduced, or even the thermal runaway smoke is not burned at all.

### Example 6

As shown in Fig. 9, a distributed fire-fighting system provided by the example is similar to the distributed fire-fighting system in Example 1. Different from Example 1, the smoke processing unit in the example includes a smoke discharge pipeline 16. The smoke discharge pipeline 16 is mainly configured for being connected to a main smoke pipeline 121. A length of the smoke discharge pipeline satisfies a safe distance H from energy storage apparatuses 11 after thermal runaway smoke is discharged. Even if the thermal runaway smoke burns, the energy storage apparatuses 11 may not be influenced due to the safe distance. Meanwhile, the smoke processing unit in the example only needs to use the smoke discharge pipeline 16, which is low in cost.

When the smoke discharge pipeline 16 is specifically arranged, an inlet of the smoke discharge pipeline is connected to the main smoke pipeline 121, and an outlet of the smoke discharge pipeline is arranged in a safe zone farther from an energy storage system. When the smoke discharge pipeline 16 is specifically arranged, the smoke discharge pipeline and the main smoke pipeline 121 may be made of one pipeline, or may be made separately and then connected together. The greater the safe distance H between the outlet of the smoke discharge pipeline 16 and the energy storage apparatuses 11, the better the effect. Considering manufacturing cost and space layout, the safe distance is optimally greater than 30 m in general. In this case, even if the thermal runaway smoke at the outlet of the smoke discharge pipeline 16 burns, an open flame generated by burning may not influence the energy storage apparatuses at all. Thus, potential safety hazards caused by burning of the thermal runaway smoke are reduced, and safety of the entire energy storage system is improved.

### Example 7

As shown in Fig. 10, the example provides an energy storage system. The energy storage system includes a plurality of energy storage apparatuses 11 and the distributed fire-fighting system in any one of Example 1 to Example 6.

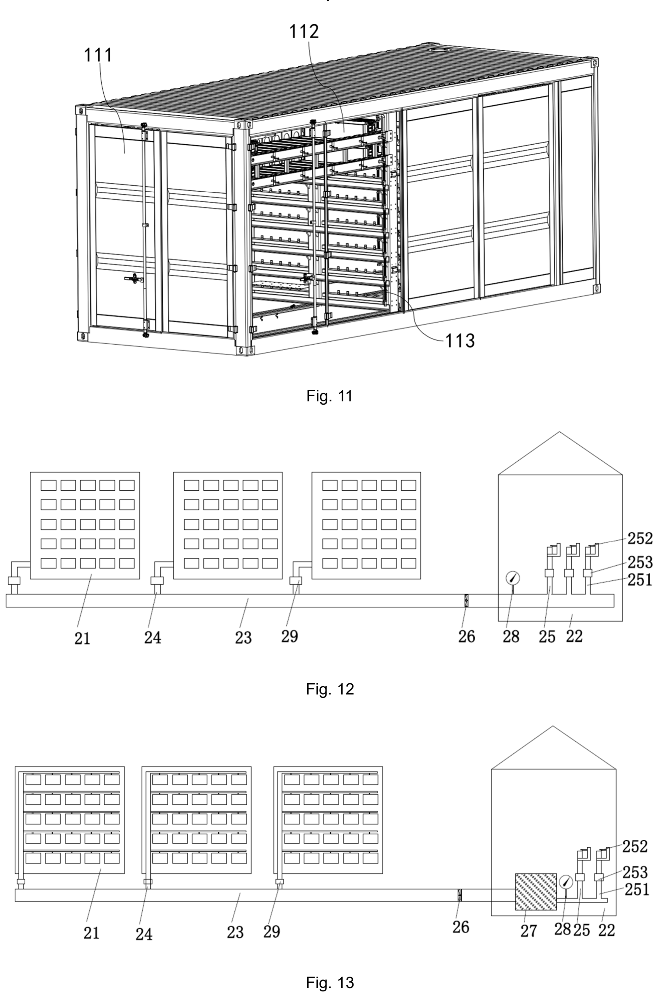

As shown in Fig. 10 and Fig. 11, in the energy storage system, a quantity of the energy storage apparatuses 11 is set as required. Each of the energy storage apparatuses 11 includes an energy storage box 111 and a plurality of battery modules 112 arranged in the energy storage box 111. The plurality of battery modules 112 are connected in series and parallel to satisfy different capacity requirements of the energy storage apparatuses 11. The plurality of energy storage apparatuses 11 are arranged according to a site environment, and the plurality of energy storage apparatuses 11 may be linearly arranged in one column or two columns, as shown in Fig. 1. In this case, a smoke processing unit is arranged at a tail end. Or, the plurality of energy storage apparatuses 11 are arranged radially, and a smoke processing unit is arranged at a center, as shown in Fig. 10.

The battery modules 112 may be battery cells, battery packs, or large-capacity batteries. The battery cells may be existing cylindrical battery cells and square-shell batteries. The battery pack includes a plurality of battery cells connected in parallel, in series, or in series and parallel. In the example, the battery module 112 is a large-capacity battery formed by connecting a plurality of battery cells in parallel. An inner cavity of each of the battery cells includes a gas zone and an electrolyte zone. The gas zone and the electrolyte zone of each of the battery cells are in communication with each other through a shared cavity. Reference is made to structures of large-capacity batteries in China patents CN117477063A, CN219892382U and CN220324596U for a specific structure of each of the battery modules 112.

As shown in Fig. 11, each of the energy storage apparatuses 11 is further provided with a pressure relief pipe 113. When any battery module 112 of the energy storage apparatuses 11 has a fire, the corresponding pressure relief pipe 113 may convey the thermal runaway smoke to a branch smoke pipeline 122, and the branch smoke pipeline 122 conveys the thermal runaway smoke to the smoke processing unit. The pressure relief pipe 113 includes the following two structures:
In an embodiment, the pressure relief pipe 113 is a single pipeline and is in communication with an inner cavity of the energy storage box 111. In this case, when thermal runaway occurs in any battery module 112, the thermal runaway smoke having high temperature and high pressure is dispersed in the energy storage box 111. In this case, the thermal runaway smoke is conveyed to the branch smoke pipeline 122 through the pressure relief pipe 113 in communication with the inner cavity of the energy storage box 111.

In another embodiment, the pressure relief pipe 113 is a combination of a plurality of branch pipes and a main pipe, and the shared cavity of each battery module 112 in the energy storage box 111 is provided with an explosion venting opening. The explosion venting opening of each battery module 112 is connected to the branch pipe, and an explosion venting film is arranged in the explosion venting opening or the branch pipe is provided with an explosion venting valve. The plurality of branch pipes are in communication with the main pipe. The main pipe penetrates a side wall of the energy storage box 111 so as to be connected to the branch smoke pipeline 122. When thermal runaway occurs in any battery module 112, high-temperature and high-pressure substances in the battery module break through the explosion venting film or the explosion venting valve, pass the branch pipes and the main pipe sequentially, and finally are conveyed to the smoke processing unit through the branch smoke pipeline 122. The solution is safer than the first solution in which the thermal runaway smoke is dispersed in the energy storage box 111. When thermal runaway occurs in an individual battery module 112 in the energy storage apparatuses 11, the thermal runaway smoke generated by thermal runaway batteries is discharged from the branch pipes and the main pipe to prevent thermal diffusion. Thus, influence of thermal diffusion on other battery modules 112 when thermal runaway occurs in the individual battery module 112 is avoided.

### Example 8

As shown in Fig. 12 to Fig. 14, a distributed fire-fighting system provided by the present application is mainly applied to an energy storage system. The energy storage system includes a plurality of energy storage apparatuses 21. Each of the energy storage apparatuses 21 includes an energy storage box 211 and a plurality of batteries 212. Each of the energy storage apparatuses 21 is provided with a pressure relief pipe 24, and the pressure relief pipe 24 draws out thermal runaway smoke in the energy storage box 211 in a centralized manner. The distributed fire-fighting system provided by the example mainly includes a safe room 22, a smoke pipeline 23, and at least one ignition device 25. An inlet of the smoke pipeline 23 is located outside the safe room 22 and is configured for being connected to the pressure relief pipes 24 of the plurality of energy storage apparatuses 21. An outlet of the smoke pipeline 23 is located inside the safe room 22. The ignition device 25 is arranged in the safe room 22, and is configured for igniting the thermal runaway smoke discharged from the smoke pipeline 23 in the safe room 22 and processing the thermal runaway smoke of the energy storage apparatuses 21.

In the example, an internal space of the safe room 22 is a burning cavity, and a side wall of the safe room has an isolation function, such that an open flame generated by burning of the thermal runaway smoke may be isolated in the safe room 22. The safe room 22 may be an existing container structure made of metal plates, or a building having a concrete structure. The building having the concrete structure may be a reinforced concrete structure or a mixed structure composed of brick walls and reinforced concrete structures. The safe room 22 having the concrete structure has high fire resistance and safety. Even if a large number of open flames are generated by burning of the thermal runaway smoke in the safe room 22, the energy storage apparatuses and nearby apparatuses may not be influenced.

In order to ensure safety, the safe room 22 is preferably made of the concrete structure. The ignition device 25 is arranged in the safe room 22, and the ignition device 25 is isolated from the energy storage apparatus 21. When the ignition device 25 ignites the thermal runaway smoke, the open flame generated by burning is completely isolated in the safe room 22. Thus, batteries 212 in the energy storage apparatuses 21 may not be influenced, potential safety hazards caconfigured by ignition of the thermal runaway smoke are reduced, and safety of the entire energy storage system is improved.

In order to ensure full burning, the safe room 22 is internally provided with a pipeline connected to an exterior, and the pipeline inputs air outside the safe room 22 into the safe room 22. Thus, the air outside the safe room 22 may participate in burning of the thermal runaway smoke, and the thermal runaway smoke may be fully burned. To further ensure safety, a safe distance is set between the safe room 22 and the energy storage apparatuses 21. In the example, a minimum distance between the safe room 22 and the energy storage apparatuses 21 is H, and H is greater than or equal to 10 m. thus, the open flame in the safe room 22 does not influence the energy storage apparatuses 21 at all.

In the example, an exhaust fan 26 is arranged in the smoke pipeline 23. The exhaust fan 26 improves timeliness of discharging the thermal runaway smoke. If thermal runaway occurs in any battery 212 in the energy storage apparatuses 21, the exhaust fan 26 quickly discharges the thermal runaway smoke in the energy storage apparatuses 21 to the safe room 22 for processing, such that the thermal runaway smoke may be prevented from being accumulated in the energy storage boxes 211. In an embodiment, an adsorption device 27 is further arranged in the safe room 22. The adsorption device 27 is arranged between the smoke pipeline 23 and the ignition device 25, and is configured for adsorbing the thermal runaway smoke before ignition. In this way, fewer ignition devices may be configured later.

In the example, a quantity of ignition devices 25 may be set according to a quantity and a requirement of the energy storage apparatuses 21 in the energy storage system, and may be set to 1, 2, or above. The energy storage system includes the plurality of energy storage apparatuses 21. In order to ensure safety, 2 or more ignition devices 25 are provided. In this case, the smoke pipeline 23 may be provided with a flow detection device 28. The flow detection device 28 turns on a corresponding quantity of ignition devices 25 according to a flow rate of the thermal runaway smoke in the smoke pipeline 23. If thermal runaway batteries in the energy storage apparatuses 21 generate less thermal runaway smoke, one of the ignition devices 25 may be turned on to process the thermal runaway smoke. If thermal runaway batteries in the energy storage apparatuses 21 generate more thermal runaway smoke, the plurality of ignition devices 25 may be turned on to ignite the thermal runaway smoke. The flow detection device 28 may be a flowmeter, a flow sensor, or another device capable of detecting a fluid flow rate in the pipeline. The device may convey flow detection data to a battery management system (BMS). The battery management system (BMS) turns on the corresponding ignition devices according to the flow detection data. In an embodiment, the plurality of ignition devices 25 are arranged, thus ensuring reliability of ignition. When one of the ignition devices 25 fails or malfunctions, the other ignition devices 25 may work normally.

In the example, the single ignition device 25 includes an exhaust pipe 251, a stop valve 253, and an igniter 252. An inlet of the exhaust pipe 251 is connected to the smoke pipeline 23. The stop valve 253 is arranged on the exhaust pipe 251 to control whether the thermal runaway smoke in the smoke pipeline 23 passes the exhaust pipe 251 and burns. The stop valve 253 is a normally-closed valve that is opened according to the flow detection data of the flow detection device 28. The igniter 252 is arranged at an outlet end of the exhaust pipe 251, and may be opened synchronously with the stop valve 253 or opened in a slightly delayed manner compared with the stop valve 253. The igniter 252 may have various structures, such as an existing arc igniter or an existing resistance wire igniter. In an embodiment, the arc igniter may be a pulse igniter. A power supply mode of the igniter may use a dry battery or an alternating current according to a site environment.

### Example 9

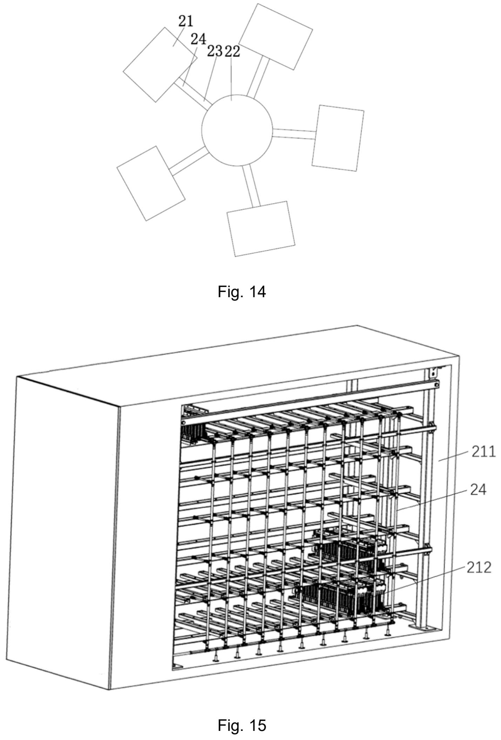

As shown in Fig. 12 to Fig. 14, an energy storage system in the present application includes a plurality of energy storage apparatuses 21, pressure relief pipes 24, and the distributed fire-fighting system. Each of the energy storage apparatuses 21 includes an energy storage box 211 and a plurality of batteries 212 arranged in the energy storage box 211. The plurality of batteries 212 are connected in series and parallel to satisfy different capacity requirements of the energy storage apparatuses 21. The plurality of energy storage apparatuses 21 are arranged according to a site environment. As shown in Fig. 12 and Fig. 13, the plurality of energy storage apparatuses 21 may be linearly arranged in one column. In this case, a safe room 22 is arranged at a tail end. Or, as shown in Fig. 14, the plurality of energy storage apparatuses 21 are arranged radially, and a safe room 22 is arranged at a center. Specific arrangement is set according to actual application.

In the energy storage system of the present application, each energy storage apparatus 21 is provided with the pressure relief pipe 24, and the thermal runaway smoke generated by each battery 212 is input into a smoke pipeline 23 through the pressure relief pipe 24. When any battery 212 of the energy storage apparatus 21 in the energy storage system has a fire, the thermal runaway smoke may be conveyed to the smoke pipeline 23 through the corresponding pressure relief pipe 24, and the smoke pipeline 23 conveys the thermal runaway smoke to the safe room 22. For instance, when a second energy storage apparatus 21 has a fire, the thermal runaway smoke may be conveyed to the smoke pipeline 23 through the pressure relief pipe 24 of the energy storage apparatus, and the smoke pipeline 23 conveys the thermal runaway smoke to the safe room 22 for processing.

The pressure relief pipes 24 in the energy storage system may be mounted in the following two modes:
In an embodiment, as shown in Fig. 12 and Fig. 14, the pressure relief pipes 24 are single pipelines and are in communication with inner cavities of the energy storage boxes 211. The pressure relief pipes 24 may be integrated with the smoke pipeline 23. In this case, a housing of each battery cell in the energy storage box 211 is provided with an explosion venting opening, and an explosion venting film is arranged in the explosion venting opening. When thermal runaway occurs in any battery cell, high-temperature and high-pressure substances in the battery cell break through the explosion venting film, and high-temperature and high-pressure thermal runaway smoke is dispersed in the energy storage box 211. In this case, the thermal runaway smoke is conveyed to the smoke pipeline 23 through the pressure relief pipe 24 in communication with the inner cavity of the energy storage box 211.

In another embodiment, as shown in Fig. 13 and Fig. 15, the pressure relief pipe 24 is a combination of a plurality of branch pipes and a main pipe, and the housing of each battery cell in the energy storage box 211 is provided with the explosion venting opening. The explosion venting opening of each battery cell is connected to the branch pipe, and an explosion venting film is arranged in the explosion venting opening or the branch pipe is provided with an explosion venting valve. The plurality of branch pipes are in communication with the main pipe. The main pipe penetrates a side wall of the energy storage box 211 so as to be connected to the smoke pipeline 23. When thermal runaway occurs in any battery cell, high-temperature and high-pressure substances in the battery cell break through the explosion venting film or the explosion venting valve, pass the branch pipes and the main pipe sequentially, and finally are conveyed to the safe room 22 through the smoke pipeline 23. The solution is safer than the first solution in which the thermal runaway smoke is dispersed in the energy storage box 211. When thermal runaway occurs in an individual battery in the energy storage apparatuses 21, the thermal runaway smoke generated by thermal runaway batteries is discharged from the branch pipes and the main pipe to prevent thermal diffusion. Thus, a situation that other batteries or even the entire energy storage apparatuses 21 are out of control and explode due to thermal diffusion when thermal runaway occurs in the individual battery is avoided.

As shown in Fig. 12 and Fig. 13, the plurality of energy storage apparatuses 21 are linearly arranged in one column, the smoke pipeline 23 is a single pipeline. When each pressure relief pipe 24 and the smoke pipeline 23 are connected in parallel, the pressure relief pipe 24 may be provided with a one-way valve 29. The one-way valve 29 prevents the thermal runaway smoke in the smoke pipeline 23 from entering the energy storage apparatuses without thermal runaway and influencing the energy storage apparatuses in a normal state. As shown in Fig. 14, the plurality of energy storage apparatuses 21 are arranged radially, a plurality of smoke pipelines 23 are provided and are in one-to-one correspondence with the energy storage apparatuses, an inlet of each smoke pipeline 23 is in communication with the pressure relief pipe of the energy storage apparatus, and an outlet of each smoke pipeline is located in the safe room 22. In this case, the outlets of the plurality of smoke pipelines 23 may be in communication with each other through one master pipe arranged in the safe room, and ignition devices 25 are arranged at an outlet of the master pipe.

Batteries in the energy storage apparatuses 21 of the example may be battery cells, battery packs, or large-capacity batteries. The battery cells may be existing cylindrical battery cells and square-shell batteries. The battery pack includes a plurality of battery cells connected in parallel, in series, or in series and parallel.

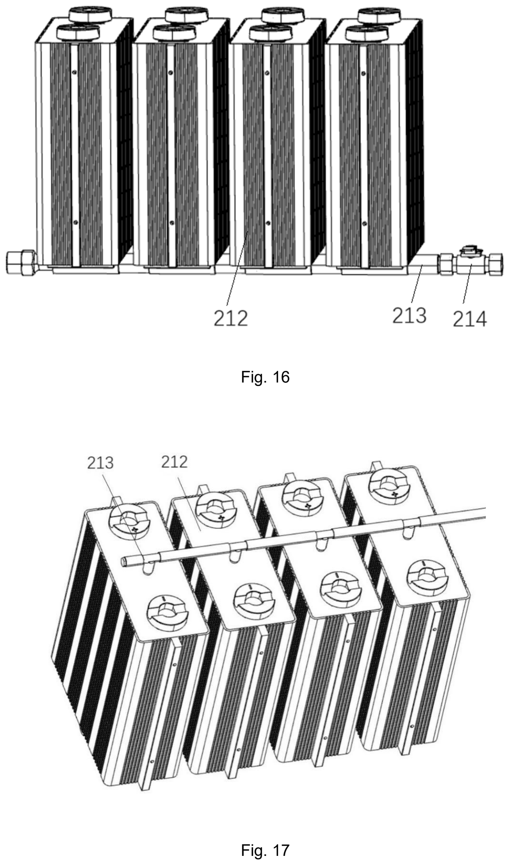

As shown in Fig. 16 and Fig. 17, in the example, the battery 212 is a large-capacity battery formed by connecting a plurality of battery cells in parallel, and an inner cavity of each battery cell includes a gas zone and an electrolyte zone. The electrolyte zones of all the battery cells are in communication with each other through shared pipelines 213, thus forming a shared electrolyte system. Or, the gas zones of all the battery cells are in communication with each other through shared pipelines 213, thus forming a shared gas system. Thus, the shared pipelines 213 may be shared gas pipelines or shared electrolyte pipelines. The shared pipelines 213 are provided with explosion venting valves 214 to provide passages for gas discharge in each battery cell when thermal runaway occurs. The pressure relief pipes 24 are connected to the explosion venting valves 214 arranged on the shared pipelines 213. When thermal runaway of the battery cells occurs, the thermal runaway smoke may be discharged from the shared gas pipelines or the shared electrolyte pipelines for processing.

In an existing energy storage system, a fire-fighting system of each energy storage apparatus 21 is arranged independently. That is, each energy storage apparatus 21 is equipped with one ignition device independently, which causes higher cost. The distributed fire-fighting system provided by the example integrates the ignition devices 25 separately arranged by all the energy storage apparatuses 21 in the related art into the safe room 22, such that different energy storage apparatuses 21 may share the ignition devices. Meanwhile, the ignition devices 25 are arranged separately from the energy storage apparatuses 21, thus facilitating arrangement and mounting of all devices in the energy storage apparatuses 21 and facilitating integration of the energy storage apparatuses 21. In an embodiment, a space use ratio in the energy storage boxes 211 may be greatly improved, and a capacity of the energy storage system may be further improved.

## Claims

1. A distributed fire-fighting system, comprising a smoke conveying unit and a smoke processing unit, wherein the smoke conveying unit is configured for gathering thermal runaway smoke of each of energy storage apparatuses in an energy storage system into the smoke processing unit; and the smoke processing unit is configured for processing the thermal runaway smoke of each of the energy storage apparatuses in a centralized manner.

2. The distributed fire-fighting system as claimed in claim 1, wherein the smoke processing unit is mainly configured for reducing a content of a combustible material in the thermal runaway smoke.

3. The distributed fire-fighting system as claimed in claim 2, wherein the smoke processing unit comprises at least one of a liquid processing device, a solid processing device, a smoke cooling device, and a gas generating device; the liquid processing device is mainly configured for processing an electrolyte in the thermal runaway smoke; the smoke cooling device is mainly configured for cooling the thermal runaway smoke and collecting the electrolyte in the thermal runaway smoke; the solid processing device is mainly configured for processing combustible gas in the thermal runaway smoke; and the gas generating device is configured for generating flame-retardant gas to reduce a concentration of the combustible material in the thermal runaway smoke.

4. The distributed fire-fighting system as claimed in claim 3, wherein the liquid processing device comprises at least one liquid processing tank; and the at least one liquid processing tank is filled with an alkaline solution.

5. The distributed fire-fighting system as claimed in claim 4, wherein the alkaline solution is a NaOH solution of 0.05 mol/L to 0.5 mol/L.

6. The distributed fire-fighting system as claimed in claim 3, wherein the smoke processing unit comprises the liquid processing device and the solid processing device that are arranged sequentially, the liquid processing device comprises at least one liquid processing tank, and the at least one liquid processing tank is filled with an alkaline solution; and the solid processing device comprises at least one solid processing tank, and the at least one solid processing tank is filled with activated carbon.

7. The distributed fire-fighting system as claimed in any one of claims 1 to 6, wherein the smoke conveying unit comprises a main smoke pipeline and a plurality of branch smoke pipelines, and each of the plurality of branch smoke pipelines is configured for being connected to the energy storage apparatus and the main smoke pipeline, and is configured for conveying the thermal runaway smoke in each of the energy storage apparatuses to the main smoke pipeline; and the main smoke pipeline gathers the thermal runaway smoke in the plurality of branch smoke pipelines into the smoke processing unit, and the plurality of branch smoke pipelines are provided with first one-way valves configured for allowing unidirectional circulation of the thermal runaway smoke.

8. The distributed fire-fighting system as claimed in claim 7, wherein the plurality of branch smoke pipelines are provided with suction devices.

9. The distributed fire-fighting system as claimed in claim 7, wherein the smoke processing unit is arranged in an empty energy storage box.

10. The distributed fire-fighting system as claimed in claim 1, wherein the smoke processing unit comprises a smoke discharge pipeline, and a safe distance exists between the smoke discharge pipeline and each of the energy storage apparatuses.

11. The distributed fire-fighting system as claimed in claim 1, wherein the smoke processing unit comprises a safe room and at least one ignition device; the smoke conveying unit comprises a smoke pipeline; an inlet of the smoke pipeline is located outside the safe room and is configured for being connected to a pressure relief pipe of at least one of the energy storage apparatuses, and an outlet of the smoke pipeline is located inside the safe room; and the ignition device is arranged in the safe room, and is configured for igniting the thermal runaway smoke discharged from the smoke pipeline in the safe room.

12. The distributed fire-fighting system as claimed in claim 11, wherein a minimum distance between the safe room and the energy storage apparatuses is H, and the H is greater than or equal to 10 m.

13. The distributed fire-fighting system as claimed in claim 12, wherein an exhaust fan is arranged in the smoke pipeline, an adsorption device is further arranged in the safe room, and the adsorption device is arranged between the smoke pipeline and the ignition device, and is configured for adsorbing the thermal runaway smoke before ignition.

14. The distributed fire-fighting system as claimed in any one of claims 11 to 13, wherein a plurality of ignition devices are arranged, the smoke pipeline is provided with a flow detection device, the flow detection device turns on a corresponding quantity of the plurality of ignition devices as claimed in a flow rate of the thermal runaway smoke in the smoke pipeline, and the safe room has a concrete structure.

15. The distributed fire-fighting system as claimed in claim 14, wherein the plurality of ignition devices comprise exhaust pipes, stop valves, and igniters, inlets of the exhaust pipes are in communication with the smoke pipeline, the stop valves are arranged on the exhaust pipes, and the igniters are arranged at outlet ends of the exhaust pipes.

16. An energy storage system, comprising a plurality of energy storage apparatuses and the distributed fire-fighting system as claimed in any one of claims 1 to 10, wherein the energy storage apparatuses comprise energy storage boxes and a plurality of battery modules arranged in the energy storage boxes, and thermal runaway smoke generated by each of the plurality of battery modules is conveyed to a smoke processing unit through a smoke conveying unit.

17. The energy storage system as claimed in claim 16, wherein the battery modules comprise a plurality of battery cells, inner cavities of the plurality of battery cells are in communication with each other through shared cavities, the shared cavities are connected to pressure relief pipes, and all of the pressure relief pipes are in communication with branch smoke pipelines.

18. An energy storage system, comprising a plurality of energy storage apparatuses, pressure relief pipes, and the distributed fire-fighting system as claimed in any one of claims 11 to 15, wherein the energy storage apparatuses comprise energy storage boxes and a plurality of batteries arranged in the energy storage boxes, and thermal runaway smoke generated by each of the plurality of batteries is input into the smoke pipeline through the pressure relief pipes.

19. The energy storage system as claimed in claim 18, wherein the pressure relief pipes are further provided with one-way valves, the one-way valves are configured for preventing the thermal runaway smoke in the smoke pipeline from entering energy storage apparatuses without thermal runaway of the plurality of energy storage apparatuses, the plurality of energy storage apparatuses are arranged linearly, and the safe room is located at tail ends of the plurality of energy storage apparatuses.

20. The energy storage system as claimed in claim 19, wherein the batteries are large-capacity batteries formed by connecting a plurality of battery cells in parallel, inner cavities of the plurality of battery cells are in communication with each other through shared pipelines, and the pressure relief pipes are connected to explosion venting valves arranged on the shared pipelines.
